# EUROPEAN PATENT APPLICATION

(11) **EP 3 115 945 A1**
(43) Date of publication of application: **11.01.2017**
(21) Application number: 16178478.0
(22) Date of filing: 07.07.2016
(51) Int. Cl.: G06Q 10/06

(54) **METHOD AND SYSTEM FOR MANAGING PERSONNEL WORK DISRUPTION IN SAFETY CRITICAL INDUSTRIES**

(30) Priority: 09.07.2015 US 201514795513
(71) Applicant: General Electric Company, Schenectady, NY 12345 (US)
(72) Inventor: LIAO, Hongwei, Niskayuna, NY New York 12309 (US); CHAN, David So Keung, Niskayuna, NY New York 12309 (US); TOMLINSON, Harold Woodruff, Niskayuna, NY New York 12309 (US); HARRINGTON, Mark Thomas, Niskayuna, NY New York 12309 (US); MATHEW, Reejo, Niskayuna, NY New York 12309 (US); YU, Han, Niskayuna, NY New York 12309 (US)
(74) Representative: Williams, Andrew Richard

(57) **Abstract**

According to some embodiments, a system 100 and method include an event module 102 operative to receive a schedule 112 and transmit an event 302; a crew tracking module 104 to receive an output from the event module, the crew tracking module operative to: track and update a status of individual crew members assigned to each event, and transmit a crew status update to the event module; a crew analytics module 106 to receive an output from the crew tracking module, the crew analytics module operative to: predict work disruptions; a memory 530 for storing program instructions 512; at least one work disruption platform processor 500, coupled to the memory, and in communication with the event module, the crew tracking module, the crew analytics module, and operative to execute program instructions 512 to: estimate, via the crew analytics module, a fatigue level of at least one of the individual crew members and a group of the individual crew members; analyze, via the crew analytics module, the data associated with at least one of the fatigue level of at least one of the individual crew members, one or more historical events, a determined derived disruption associated with the event, and a crew rules violation, via the crew analytics module, to determine if one or more predicted work disruptions exist; and generate, via the crew analytics module, an indication of one or more predicted work disruptions based on one or more determined predicted work disruptions. Numerous other aspects are provided.

## Description

### BACKGROUND

In safety critical industries (e.g., airlines, railways, healthcare, oil, and gas), personnel may often follow strict work schedules and rules on a 24 hour a day, 7 days a week basis to ensure safe operations. Work schedule disruptions may be caused by disruptions such as extreme weather conditions, unexpected equipment maintenance, infrastructure induced delays, industrial action and personnel sickness, for example.

Typically, personnel work disruption management systems react to current disturbances or past disturbances (i.e., reactively). Reactive only disturbance resolution may be very costly for safety-critical industries. In safety-critical industries, personnel often follow strict work schedules and rules, and as such, the shorter the reaction time window for a disruption, the higher the cost the disruption will incur as fewer options may exist for recovery from disruptions. For example, when a flight is canceled in airline operations, the on-call crew must be provided and paid for, even though the flight was canceled. As another example, crew-related disruptions (e.g., crew fatigue) that are detected close to departure time may result in a cancelled flight, which is very costly for airlines.

Therefore, it would be desirable to design a system and method that provides for a quicker, and more effective way to pro-actively predict and handle future/potential disturbances to personnel work schedules.

### BRIEF DESCRIPTION

According to some aspects, a system is provided. The system includes an event module operative to receive a schedule and transmit an event; a crew tracking module to receive an output from the event module, the crew tracking module operative to: track and update a status of individual crew members assigned to each event, and transmit a crew status update to the event module; a crew analytics module to receive an output from the crew tracking module, the crew analytics module operative to: predict work disruptions; a memory for storing program instructions; at least one work disruption platform processor, coupled to the memory, and in communication with the event module, the crew tracking module, the crew analytics module, and operative to execute program instructions to: estimate, via the crew analytics module, a fatigue level of at least one of the individual crew members and a group of the individual crew members; analyze, via the crew analytics module, the data associated with at least one of the fatigue level of at least one of the individual crew members, one or more historical events, a determined derived disruption associated with the event, and a crew rules violation, via the crew analytics module, to determine if one or more predicted work disruptions exist; and generate, via the crew analytics module, an indication of one or more predicted work disruptions based on one or more determined predicted work disruptions.

According to some aspects, a method is provided. The method includes receiving, at an event module, a schedule and transmitting an event; receiving, at a crew tracking module, the schedule and the event, and tracking and updating a status of individual crew members assigned to each event, and estimating, via a crew analytics module, a fatigue level of at least one of the individual crew members and a group of the individual crew members; analyzing, via the crew analytics module, the data associated with at least one of the fatigue level of at least one of the individual crew members, one or more historical events, a crew rules violation, and a determined derived disruption associated with the event, to determine if one or more predicted work disruptions exist; and generating, via the crew analytics module, an indication of one or more predicted work disruptions based on one or more determined predicted work disruptions.

According to some aspects, a non-transitory, computer-readable medium is provided. The computer-readable medium stores instructions that, when executed by a work disruption platform processor cause the work disruption platform processor to perform a method associated with work disruptions, the method comprising: receiving, at an event module, a schedule and transmitting an event; receiving, at a crew tracking module, the schedule and the event, and tracking and updating a status of individual crew members assigned to each event, and estimating, via a crew analytics module, a fatigue level of at least one of the individual crew members and a group of the individual crew members; analyzing, via the crew analytics module, the data associated with at least one of the fatigue level of at least one of the individual crew members, one or more historical events, a crew rules violation, and a determined derived disruption associated with the event, to determine if one or more predicted work disruptions exist; and generating, via the crew analytics module, an indication of one or more predicted work disruptions based on one or more determined predicted work disruptions.

As used herein, "facilitating" an action includes performing the action, making the action easier, helping to carry the action out, or causing the action to be performed. Thus, by way of example and not limitation, instructions executing on one processor might facilitate an action carried out by instructions executing on a remote processor, by sending appropriate data or commands to cause or aid the action to be performed. For the avoidance of doubt, where an actor facilitates an action by other than performing the action, the action is nevertheless performed by some entity or combination of entities.

One or more aspects of the invention or elements thereof can be implemented in the form of a computer program product including a computer readable storage medium with computer usable program code for performing the method steps indicated. Furthermore, one or more aspects of the invention or elements thereof can be implemented in the form of a system (or apparatus) including a memory, and at least one processor that is coupled to the memory and operative to perform exemplary method steps. Yet further, in another aspect, one or more aspects of the invention or elements thereof can be implemented in the form of means for carrying out one or more of the method steps described herein; the means can include (i) hardware module(s), (ii) software module(s) stored in a computer readable storage medium (or multiple such media) and implemented on a hardware processor, or (iii) a combination of (i) and (ii); any of (i)-(iii) implement the specific techniques set forth herein.

A beneficial effect of some aspects of the invention is an improved technique and system for managing personnel work disruptions. With this and other advantages and features that will become hereinafter apparent, a more complete understanding of the nature of the invention can be obtained by referring to the following detailed description and to the drawings appended hereto.

Other aspects are associated with systems and/or computer-readable medium storing instructions to perform any of the methods described herein.

### DRAWINGS

FIG. 1 illustrates a system according to some embodiments.
FIG. 2 is a flow diagram according to some embodiments.
FIG. 3 illustrates a data set according to some embodiments.
FIG. 4 is a flow diagram according to some embodiments.
FIG. 5 illustrates a block diagram of a work disruption management processing tool or platform according to some embodiments.

### DETAILED DESCRIPTION

In safety critical industries (e.g., airlines, railways, healthcare, oil, and gas), personnel may follow strict work schedules and rules on a 24 hour a day, 7 days a week basis to ensure safe operations. Work schedule disruptions may be caused by disruptions such as extreme weather conditions, unexpected equipment maintenance, infrastructure induced delays, industrial action and personnel sickness, for example. Conventional work personnel management systems react to current or past disturbances (i.e. reactively). It is desirable to pro-actively predict future and/or potential disruptions, and use this information to better manage personnel disruptions.

Some embodiments may include tracking and analyzing system operation status and personnel status, via event modules, crew tracking modules, and crew analytics modules, to detect current personnel work disruptions, and further derive and predict future disruptions based on causal analysis, for example. One or more embodiments provide for the management of personnel work disruptions both reactively and pro-actively. In one or more embodiments, the detected and derived (current, future and potential) disruptions may be sent to a recovery module for solutions to the disruptions (e.g., "recovery solutions"). In one or more embodiments, an existing work plan may be evaluated for personnel disruption risk (e.g., caused by personnel fatigue or work disruptions). One or more embodiments may be used during the day of operation in the safety critical industry for real-time or fast-time simulation, analytics and decision making. One or more embodiments may be used "off-line" to evaluate a work plan and conduct "what-if" analysis of various examples of disruption scenarios (e.g., What if plane X were delayed by 20 minutes? How would that affect plane Y's flight?).

While the airline industry is the safety critical industry used as an example herein, embodiments of the invention are applicable to other safety critical industries (e.g., railways, healthcare, oil, gas, etc.).

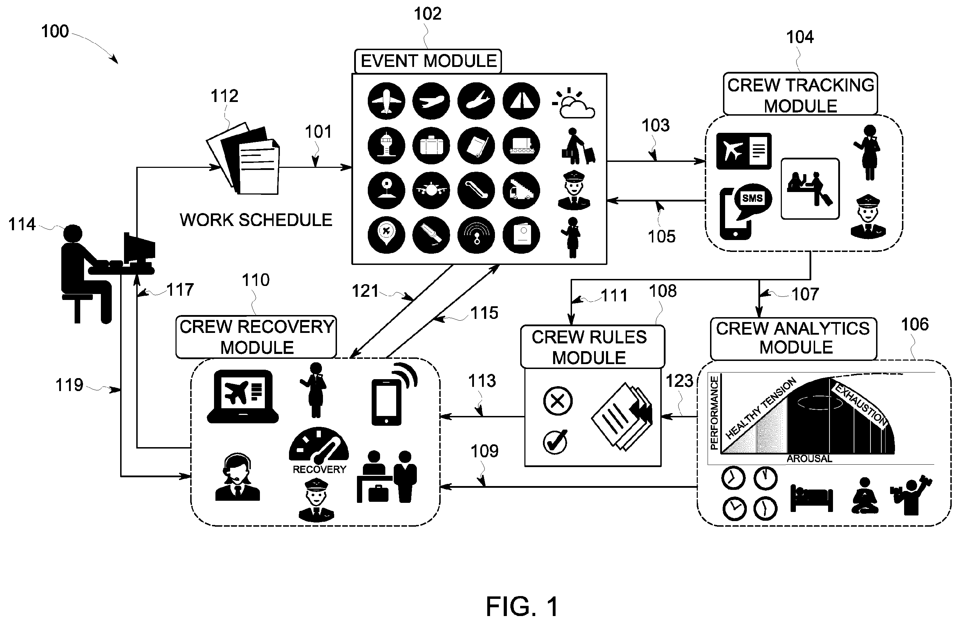

FIG. 1 is an example of a work disruption management system 100 according to some embodiments. The system 100 may include an event module 102, a crew tracking module 104, a crew analytics module 106, a crew rules module 108, and a crew recovery module 110.

As will be further described below, the event module 102 may receive 101 a work schedule 112 including personnel assignments and flight schedules and create an event. As used herein, an "event" may refer to anything that causes a change in the system state. For example, as "discrete event simulations," as used in operations research. An "event" may refer to regular operational events, driven by system operations, rules and dynamics. For example, to simulate a flight, the events of interest may include: crew get onboard, load passengers, load cargo, push back from gate, taxi out, take off, ascent, cruise, descend, land, taxi in, arrive at gate, unload cargo, unload passenger, crew deplane. A disruption event may be driven by factors beyond normal operations. For example, disruption events may be external events such as: weather disruption, congestion at runway, crew sick, crew report late to airport, or generic consequential events such as flight cancellation and flight delay. In some embodiments an "event" is an instance of something scheduled to occur at a particular time that uses a particular amount of personnel. For example, in terms of the airline industry, broadly-speaking, an event may be a scheduled flight from point A to point B; while in terms of the healthcare industry, an event may be a surgical operation. As used herein, "personnel" and "crew" may be used interchangeably. The work schedule 112 may be input by a user 114, received from another system or component of a system, or any other suitable means. In one or more embodiments, the event module 102 may receive updates for the event in real-time. For example, in terms of the airline industry, the event (e.g., scheduled flight) may be updated as flight status information (e.g., crew check-in, load passengers, departure, take-off, in-flight, arrival) is received by the event module 102. In one or more embodiments, the event module 102 may receive (e.g., from user 114 or from crew tracking module 104, for example) information regarding actual, estimated, predicted and/or hypothetical disruptions (e.g., weather, flight cancelation or delay, crew sick leave, airport curfew) to at least one of update the event or to send to the crew tracking and/or analytics modules 104, 106 to predict a work disruption, as further described below.

In one or more embodiments, the event module 102 may be a simulation module that may simulate each individual flight, for example, in the work schedule 112, and provide simulated flight status information (e.g., crew check-in, load passenger, departure, take off, in flight, arrival) as well as simulated actual, estimated, predicted and/or hypothetical disruptions to the crew tracking module 104, and by extension the crew analytics module 106, to predict work disruptions for the simulated flights. In one or more embodiments, simulated actual disruptions may model the actual (e.g., historical) disruption, which may have already occurred and is known to users, by simulation. For example, a snow storm occurred at 9am and the current time is 10am. The actual weather scenario may be simulated so as to incorporate the disruption impact into the system, which may facilitate decision making going forward. The simulations may allow a user to test hypothetical events, which may help inform business decisions. In one or more embodiments, simulated hypothetical disruptions model the hypothetical disruption. Keeping with the snowstorm example form above, the weather forecast indicates there will be another snow storm between 3pm and 5pm with 6 to 10 inches of precipitation. There are some uncertainties in this scenario (e.g., time and severity of the snow storm). In the simulation, some hypothetical disruption scenarios are created to deal with the uncertainties (e.g., 3pm 6 inches, 3pm 8 inches, 3pm 10 inches, 3:30pm 6 inches, 3:30pm 8 inches, etc.). Another application of simulated hypothetical disruption is "what-if'' analysis of a work plan e.g., to stress test a work plan under various scenarios of disruptions. The event module 102 may use a simulation-based process to model various system components and resources, and track their status, (e.g., in terms of an airline flight, flight status, passenger status, luggage status, cargo status, airport status, airspace status weather status, etc.). In one or more embodiments, as a simulation module, the event module 102 may use simulation-based techniques (e.g., discrete-event simulations) to model a "virtual airline," for example, to act as a framework to provide information to the other modules.

The event module 102 may send 103 the event occurrence information (e.g., flight departure, flight arrival, aircraft loading, reporting for duty, etc.) to the crew tracking module 104. In one or more embodiments, the crew tracking module 104 may derive crew status information from the event occurrence information and may update the current crew status information stored in the crew tracking module 104 based on the received event occurrence information. In one or more embodiments, the individual crew status information may include crew location, cumulative work time (e.g., duty time and flight time), rest time, and work plan. Other suitable crew status information may be used. Of note, an individual crew may be on duty but may not be in flight, and there may be different rules associated with each category (non-flight duty vs. flight duty). In one or more embodiments, the crew tracking module 104 may track and update the status of individual crew assigned to each event (e.g., flight) based on the received event occurrence information. In one or more embodiments, the updated crew status information may be transmitted 105 back to the event module 102 to facilitate a simulated event. In one or more embodiments, the crew tracking module 104 may include crew status information different from the crew information received from the event module 102 per the work schedule 112. For example, updated crew status information may be input to the crew tracking module 104 from an external source (e.g., directly from crew members, a crew manager, etc.) after the work schedule 112 has been entered in the system 100. In one or more embodiments, the crew tracking module 104 may compare the crew status information for the crew associated with the event to other crew status information for that crew (e.g., crew status information from an external source), and if the crew status information is different, may transmit 105 the externally input crew status information to the crew tracking module 104 as an update to the event module 102.

The crew tracking module 104 may send 107 the system status information (including crew status) to the crew analytics module 106. In one or more embodiments, crew status and system status may include current status as well as historical status information. In one or more embodiments, crew status may be a subset of the system status, since "crew" is a part of the "system." In one or more embodiments, system status may include status of flights, aircrafts, crew members, passengers, cargo, etc. For example, with crew members, their status may include current location, current flight duty, accumulative flight time, accumulative duty time, flight time limit, duty time limit etc. Historical status may include flights flow in the duty, previous flight duties, check-in time of the duty, disruptions experienced in the duty, etc. In one or more embodiments, the crew analytics module 106 may use the received information to estimate the fatigue level of the crew individually, or as a group, which may be at least one aspect used by the crew analytics module 106 to predict one or more work disruptions. In one or more embodiments, the crew analytics module 106 may use machine learning processes, which may use historical data containing crew fatigue related information, to develop prediction models and estimated fatigue scores for the crew. In some embodiments, the crew analytics module 106 may use physiological models to characterize crew fatigue levels, with respect to the environmental factors, duties, flights, rests, and experienced disruptions. Other suitable methods of estimating fatigue level may be used. In one or more embodiments, the crew analytics module 106 may analyze the received crew status and system status information to detect current work disruptions (e.g. based on delays; crew fatigue and/or crew rules, as discussed further below, and, in some embodiments, simulation logic); derive future work disruptions (e.g., based on causal analytics); and predict potential work disruptions (e.g., based on prognostics).

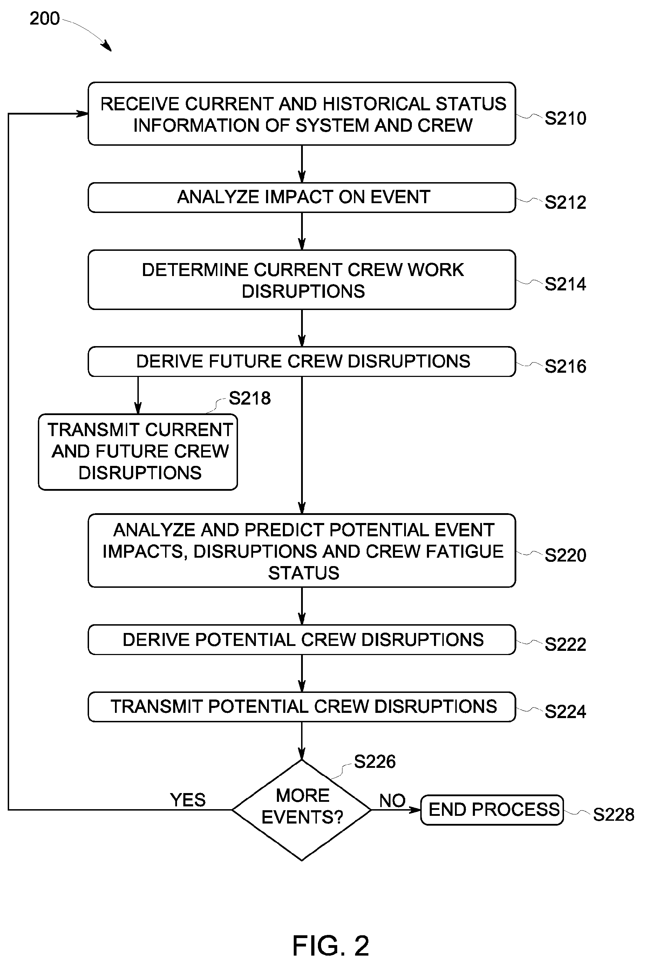

Turning to FIG. 2, in one example of operation according to some embodiments, a flow diagram of a process 200 according to some embodiments is provided. Process 200 and the other processes described herein may be performed using any suitable combination of hardware (e.g., circuit(s)), software or manual means. In one or more embodiments, the system 100 is conditioned to perform the process 200, such that the system 100 is a special purpose element configured to perform operations not performable by a general purpose computer or device. Software embodying these processes may be stored by any non-transitory tangible medium including a fixed disk, a floppy disk, a CD, a DVD, a Flash drive, or a magnetic tape. Examples of these processes will be described below with respect to the elements of the system 100, but embodiments are not limited thereto.

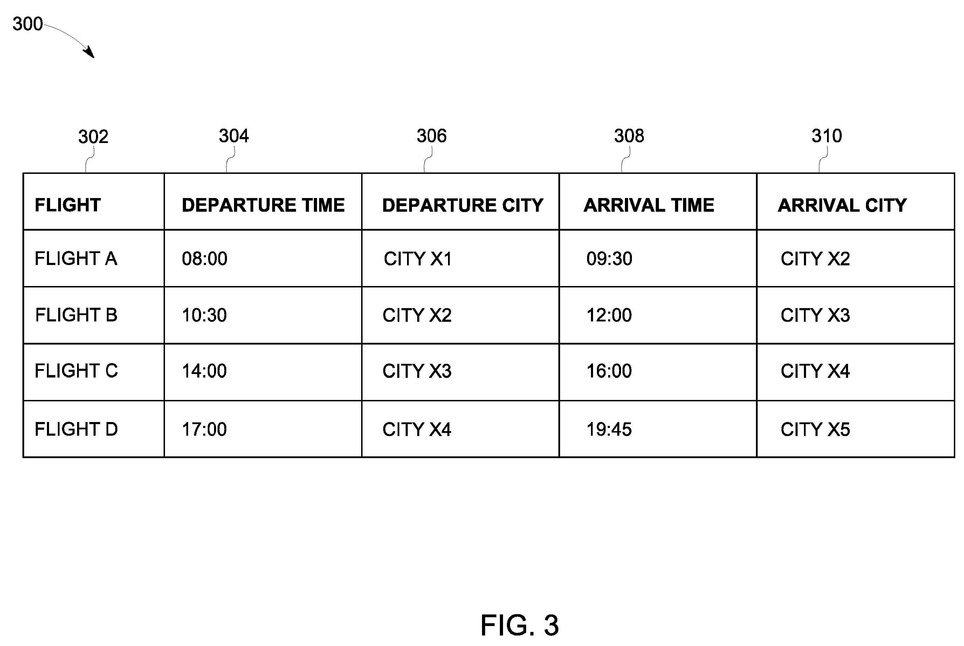

Initially, at S210 current and historical status information of the system and crew are received at the crew analytics module 106. In one or more embodiments, the current and historical status information may be for a system and/or crew associated with a specific event. In one or more embodiments, the historical event is of a same event type as the transmitted event. Then in S212, the crew analytics module 106 analyzes the current and historical information to determine the impact of this information on the event (e.g., flight). Current crew work disruptions are determined in S214. Future crew disruptions may be derived in S216 based on causal analytics associated with the current crew disruptions (e.g., the current crew disruption causes the future derived crew disruption). In one or more embodiments, causal analytics may use both crew-related analysis and flight-related analysis to derive future crew disruptions. For example, current crew disruptions may cause (current and/or future) flight disruptions, which may cause future crew disruptions. The crew and aircraft may be viewed as two types of resources to operate a flight, and if one type of resource is disrupted, this disruption may impact the other resource ("interactive impact"). This interactive impact may propagate downstream throughout the industry. In one or more embodiments, causal analysis may be used to capture the interactive impacts and propagation impacts described above. Future crew disruptions may be derived using other suitable analysis. In S218, the determined current crew disruptions and derived future crew disruptions are sent to the crew recovery module 110. In S220, the crew analytics module 106 may further analyze the current and historical status information to predict potential event impacts, disruptions, and crew fatigue status. In one or more embodiments, S220 may occur before S218, after S218, or at substantially the same time as S218. Then in S222, potential crew disruptions may be derived based on predictions and prognostics, as described further below with respect to FIG. 3. In one or more embodiments, potential crew disruptions may include typical disruptions, and disruptions caused by crew fatigue. Then in S224, the predicted potential crew disruptions are sent to the crew recovery module 110. In S226, a determination is made whether more events are available for analysis. If it is determined in S226 that no more events are available, the process ends in S228. If it is determined in S226 that more events are available, the process 200 returns to S210 and current and historical status information for a system and crew for a particular event are received.

The crew analytics module 106 may transmit 109 predicted and actual crew work disruptions to the crew recovery module 110. In one or more embodiments, the crew recovery module 110 may analyze the work disruption, and based on the analysis, the crew recovery module 110 may generate one or more recovery solutions to the work disruptions. In one or more embodiments, the crew recovery module 110 may apply at least one of several crew recovery processes to the work disruption to generate a recovery solution. For example, the crew recovery module 110 may apply at least one of an optimization/solver-based process, a simulation-based process, a rule-based process, an empirical process, and a heuristic-based process to the work disruption to generate a recovery solution. Other suitable crew recovery processes may be applied.

In one or more embodiments, the crew tracking module 104, may also transmit 111 the crew status information to the crew rules module 108 prior to at least one aspect of the event (e.g., flight departure). In one or more embodiments, the crew status information may be transmitted to the crew analytics module 106 and the crew rules module 108 at substantially the same time. The crew rules module 108 may determine if, by participating in the event, any of the crew duty and rest requirements are violated. In one or more embodiments, the industry associated with the event (e.g., 14 CFR 117 for the airline industry) may include requirements and regulations associated with the crew. For example, in the airline industry, a crew with four flight legs can work on a duty for a maximum of 13 hours. If a rule and/or regulation is violated, the crew rules module 108 may, in one or more embodiments, transmit 113 the violation to the crew recovery module 110. The crew recovery module 110 may analyze the violation, which may be considered a work disruption, and based on the analysis, the crew recovery module 110 may generate one or more recovery solutions to the work disruption.

FIG. 3 provides an example schedule 300 of four different events 302 (e.g., Flight A, Flight B, Flight C, and Flight D), including for each flight, the flight departure time 304, the departure city 306, the arrival time 308 and the arrival city 310. A crew is on duty, and assigned to fly Flights A, B, C and D. For the example described herein, the crew needs at least 30 minutes to change from one flight to another. The crew started his first duty at 7am, and experienced a delay of 90 minutes caused by the delay of Flight A, due to aircraft maintenance. The aircraft maintenance delay may be input to the event module 102 as a disruption event. The delay will cause the crew to arrive at City X2 at 9:30 plus 90 minutes (i.e., 11:00).

As described above with respect to S214 in FIG. 2, the crew analytics module 106 may determine the crew will arrive at City X2 late. If no recovery action is taken, the crew will be ready for Flight B at 11:00 plus 30 minutes (i.e., 11:30), which will cause a 1-hour departure delay for Flight B. In one or more embodiments, this disruption may be sent 109 to the crew recovery module 110, such that the crew recovery module 110 generates a recovery solution. A recovery solution may be, for example, to find a standby crew to replace the disrupted crew and fly Flight B, which may avoid or reduce the departure delay of Flight B, and deadhead the disrupted crew from City X2 to city X3, via another flight. As used herein, to "deadhead a crew" means to move crew from one place to another but this movement is not part of "active duty" such that the time spent moving may not be considered part of the flight hours, but may be considered part of the duty hours.

If the recovery solution provided above is used, the original crew will be deadheaded to City X3, arriving at 14:00. Since the crew needs at least 30 minutes to change from one flight to another, the crew will be ready for Flight C at 14:30, which will case a 30-minute departure delay of Flight C. This delay of Flight C may be considered the "derived" disruption, which may be derived from causal analysis, as described in S216 in FIG. 2.

Based on the above, Flight C will have a departure delay of 30 minutes, for example. A late departure may incur further delays (e.g., longer waits for a runway to takeoff, longer flight times due to air traffic control constraints, as more aircrafts may be flying at a later time, shortage of landing slots at destinations, etc.). The crew analytics module 106 may then, per S220 in FIG. 2, predict and analyze potential disruptions/delays, based on, for example, analysis of historical operations. For example, predictive analysis may determine, based on historical operations, an additional 35 minutes of predicted delay for Flight C due to a longer wait for a runway to takeoff. As such, if Flight C departs at 14:30, based on the predictive analysis performed by the crew analytics module 106, Flight C will arrive at City X4 at 17:05 (16:00 plus 30 minutes departure delay plus 35 minutes predicted delay).

If Flight C arrives at City X4 at 17:05, the earliest the crew will be ready for Flight D is 17:35, which will cause a 35 minute departure delay for Flight D. While the predicted disruption herein uses causal analysis in addition to prognostics, other analyses may be used to predict the disruptions. Assuming Flight D does not experience any other delays, Flight D will arrive at City X5 at 20:20.

As described above, the recovery solution may be sent 115 from the crew recovery module 110 to the event module 102. In one or more embodiments, the recovery solution may be sent 103 from the event module 102 to the crew tracking module 104, and then may be sent 111 to the crew rules module 108. The crew rules module 108 may compare the recovery solution to various rules and regulations to determine whether the solution meets the limitations and requirements for crew. In one or more embodiments, the recovery solution may be sent directly to the crew rules module 108, which also receives 111 crew status information from the crew tracking module 104 to determine whether the solution meets the limitations and requirements for crew. In the example herein, per US federal regulations regarding flight and duty limitations and rest requirements, the crew who started duty at 7am and has four flight legs can work on a duty for a maximum of 13 hours. However, if the crew flies Flight D, the crew rules module 108 may determine the crew will violate the duty limit by 20 minutes. While in this example the duty limit violation is determined based on both "predictive" analysis (for Flight C) and causal analysis, other analyses may be used. The crew rules module 108 may send 113 this violation to the crew recovery module 110, and the crew recovery module 110 may propose another recovery solution. In one or more embodiments, the crew analytics module 106 may transmit 123 predicted and actual crew work disruptions to the crew rules module 108 to determine potential violations. As described above, if the crew rules module 108 detects a violation, the crew rules module 108 may send 113 this violation to the crew recovery module 110 for a recovery solution. An advantage of the crew rules module 108 determining whether rules are (or will be) violated is that the crew rules module 108 may be easily adapted to capture regulations from different governing bodies and/or customized rules.

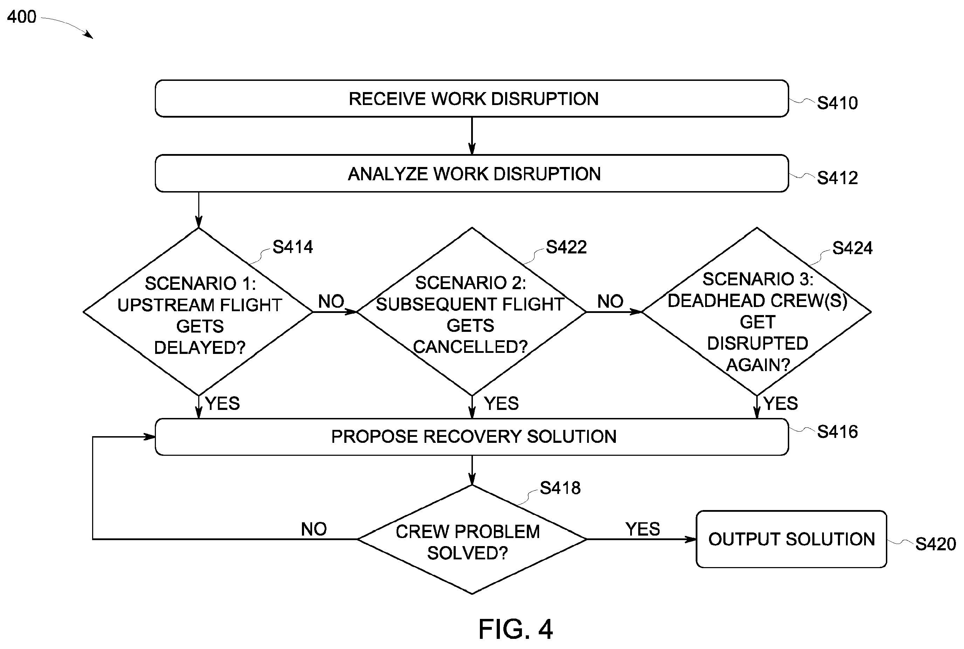

Turning to FIG. 4, an example of process 400 performed by the crew recovery module 110 is provided for a work disruption related to a flight. In S410, a work disruption is received by the crew recovery module 110. The crew recovery module 110 analyzes the work disruption in S412 to determine disrupted crew information. In the example shown herein, the crew recovery module 110 may determine, via analysis, whether the crew work disruption is the result of one of three scenarios. Other suitable scenarios may be used. In S414, the crew recovery module 110 determines whether the upstream flight got delayed. In one or more embodiments, given a crew and two consecutive flights in his duty, the earlier flight is an "upstream flight" of the later flight, with respect to this crew. For example, in FIG. 3, Flight C is the upstream flight of Flight D, with respect to the crew under consideration in this example. If the upstream flight was delayed, the method 400 proceeds to S416, and the crew recovery module 110 proposes a recovery solution. For the upstream flight delay scenario, the proposed recovery solution may be to delay the subsequent flight (e.g., by less than or equal to 15 minutes). Then in S418, the crew recovery module 110 determines whether the crew work disruption (e.g., problem) is solved. If the crew work disruption is solved, the crew recovery module 110 may output the result in S420. In one or more embodiments, the user 114 may receive multiple proposed solutions and select a solution.

If it is determined in S418 that the proposed recovery solution does not resolve the crew work disruption, the method proceeds back to S416 to propose another recovery solution. In one or more embodiments, the crew recovery module 110 may iteratively propose recovery solutions until at least one of a crew work disruption problem is resolved, a user-defined time limit has been reached and no resolution is provided, and a user-defined number of solutions have been proposed that do not resolve the crew work disruption. In one or more embodiments, if no solution is found, a flight may be canceled. For example, another recovery solution to the upstream flight getting delayed scenario may be a direct self-fix proposal whereby the shortest round-trip in the subsequent flights is skipped. If skipping this flight solves the crew work disruption, the skipped flight may be provided with a standby/reserved crew or the flight may be canceled. If the direct self-fix proposal does not resolve the crew work disruption (e.g., S418 is determined to be "no"), an indirect self-fix may be proposed at S416, whereby the crew may be deadheaded to subsequent flights. In one or more embodiments, the crew recovery module 110 may determine feasible swapping operations among disrupted crews (e.g., heuristic approach), as part of a recovery solution.

If in S414, the crew recovery module 110 determines the upstream flight did not get delayed, the method 400 proceeds to S422, and the crew recovery module 110 determines whether the subsequent flight got canceled. If the subsequent flight was canceled in S422, a recovery solution is proposed in S416, and the method 400 continues until a recovery solution is output in S420 or the process terminates.

If in S422, the crew recovery module 110 determines the subsequent flight was not canceled, the method 400 proceeds to S424, and the crew recovery module 110 determines whether the deadhead crew is disrupted again. As described above, to "deadhead crew" means to move crew from one place to another, but this movement is not part of "active duty" such that the time spent moving may not be considered part of the flight hours, but may be considered part of the duty hours. If the deadhead crew was disrupted again in S424, a recovery solution is proposed in S416, and the method continues until a recovery solution is output in S420 or the process terminates.

For the subsequent flight being canceled (Scenario 2) and the deadhead crew being disrupted again (Scenario 3), the first proposed recovery solution may be, for example, a direct self-fix proposal whereby the shortest round-trip in the subsequent flights is skipped, as described above with respect to the upstream flight getting delayed (Scenario 1). If skipping this flight solves the crew work disruption, the skipped flight may be provided with a standby/reserved crew or the flight may be canceled. If the direct self-fix proposal does not resolve the crew work disruption (e.g., S418 is determined to be "no"), a second recovery solution of an indirect self-fix may be proposed at S416, as described above with respect to Scenario 1, whereby the crew may be deadheaded to subsequent flights. In one or more embodiments, the crew recovery module 110 may determine feasible swapping operations among disrupted crews (e.g., heuristic approach), as part of a recovery solution.

Turning back to FIG. 1, in one or more embodiments, the crew recovery module 110 may transmit 115 the recovery solution directly to the event module 102. In one or more embodiments, the crew recovery module 110 may transmit 117 the proposed recovery solution to one or more users 114 prior to, or at substantially the same time, sending the recovery solution to the event module 102. In one or more embodiments, the user 114 may approve and/or select the recovery solution, or select one recovery solution if more than one recovery solution is proposed, or reject the proposed recovery solution, and may provide a recovery solution override or may amend information (e.g., constrains, assumptions, parameters, input data) such that the crew recovery module 110 may provide additional proposed recovery solutions. The user's 114 final decision may be transmitted 119 to the crew recovery module 110 and may then be transmitted 115 to the event module 102. The user 114 may be, for example, at least one of operators, controllers, station managers, crew members, crew managers, airline service providers, airline schedule assessors, airline network researchers. Other suitable users may be used. In one or more embodiments, the user 114 may be an automatic decision process, which may result in the system 100 being fully automated.

In one or more embodiments, the event module 102 may transmit 121 a request for a recovery solution directly to the crew recovery module 110. For example, when a flight does not have a complete flight crew due to irregular airline operations, the event module 102 may invoke the crew recovery module 110 to generate a recovery solution.

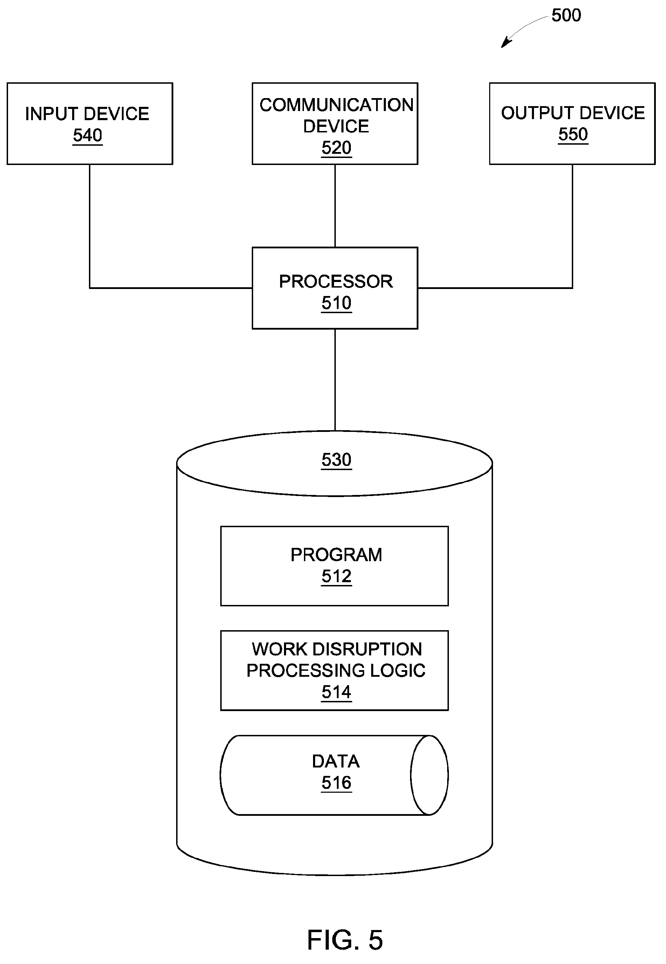

Note the embodiments described herein may be implemented using any number of different hardware configurations. For example, FIG. 5 illustrates a work disruption management processing platform 500 that may be, for example, associated with the system 100 of FIG. 1. The work disruption management processing platform 500 comprises a work disruption platform processor 510, such as one or more commercially available Central Processing Units (CPUs) in the form of one-chip microprocessors, coupled to a communication device 520 configured to communicate via a communication network (not shown in FIG. 5). The communication device 520 may be used to communicate, for example, with one or more users. The work disruption management processing platform 500 further includes an input device 540 (e.g., a mouse and/or keyboard to enter information about variables, clustering and optimization) and an output device 550 (e.g., to output and display the selected samples).

The processor 510 also communicates with a storage device 530. The storage device 530 may comprise any appropriate information storage device, including combinations of magnetic storage devices (e.g., a hard disk drive), optical storage devices, mobile telephones, and/or semiconductor memory devices. The storage device 530 may store a program 512 and/or work disruption processing logic 514 for controlling the processor 510. The processor 510 performs instructions of the programs 512, 514, and thereby operates in accordance with any of the embodiments described herein. For example, the processor 510 may receive event data and then may apply the crew tracking module 104 and then the crew analytics module 106 via the instructions of the programs 512, 514 to predict one or more work disruptions. The storage device 530 may also store data 516 (e.g., schedules, industry crew rules, etc.) in a database, for example.

The programs 512, 514 may be stored in a compressed, uncompiled and/or encrypted format. The programs 512, 514 may furthermore include other program elements, such as an operating system, a database management system, and/or device drivers used by the processor 510 to interface with peripheral devices.

As used herein, information may be "received" by or "transmitted" to, for example: (i) the platform 500 from another device; or (ii) a software application or module within the platform 500 from another software application, module, or any other source.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It should be noted that any of the methods described herein can include an additional step of providing a system comprising distinct software modules embodied on a computer readable storage medium; the modules can include, for example, any or all of the elements depicted in the block diagrams and/or described herein; by way of example and not limitation, a clustering module and an optimization module. The method steps can then be carried out using the distinct software modules and/or sub-modules of the system, as described above, executing on one or more hardware processors 510 (FIG. 5). Further, a computer program product can include a computer-readable storage medium with code adapted to be implemented to carry out one or more method steps described herein, including the provision of the system with the distinct software modules.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application.

Those in the art will appreciate that various adaptations and modifications of the above-described embodiments can be configured without departing from the scope of the claims. Therefore, it is to be understood that the claims may be practiced other than as specifically described herein.

Various aspects and embodiments of the present invention are defined by the following numbered clauses:
1. A system comprising:
   an event module operative to receive a schedule and transmit an event;
   a crew tracking module to receive an output from the event module, the crew tracking module operative to:
      track and update a status of individual crew members assigned to each event, and
      transmit a crew status update to the event module;
   a crew analytics module to receive an output from the crew tracking module, the crew analytics module operative to:
      predict work disruptions;
   a memory for storing program instructions;
   at least one work disruption platform processor, coupled to the memory, and in communication with the event module, the crew tracking module, the crew analytics module, and operative to execute program instructions to:
      estimate, via the crew analytics module, a fatigue level of at least one of the individual crew members and a group of the individual crew members;
      analyze, via the crew analytics module, the data associated with at least one of the fatigue level of at least one of the individual crew members, one or more historical events, a determined derived disruption associated with the event, and a crew rules violation, via the crew analytics module, to determine if one or more predicted work disruptions exist; and
      generate, via the crew analytics module, an indication of one or more predicted work disruptions based on one or more determined predicted work disruptions.
2. The system of clause 1, wherein the historical event is of a same event type as the transmitted event.
3. The system of any preceding clause, wherein the crew analytics module determines a derived disruption associated with the event based on a causal analysis.
4. The system of any preceding clause, wherein the determined derived disruption associated with the event is a result of an earlier disruption.
5. The system of any preceding clause, further comprising:
   a crew rules module to receive an output from the crew tracking module, the crew rules module operative to determine if the status of individual crew members poses at least one of a fatigue risk and a rules violation.
6. The system of any preceding clause, further comprising:
   a crew recovery module to receive an output from at least one of the crew analytics module and the crew rules module, the crew recovery module operative to generate a recovery solution in response to at least one of a predicted work disruption, a fatigue risk and a rules violation.
7. The system of any preceding clause, wherein the event is at least one of a flight departure, a flight arrival, an aircraft loading, a crew reporting for duty.
8. The system of any preceding clause, wherein the event module is a simulation module, and the event is a simulated event.
9. A method comprising:
   receiving, at an event module, a schedule and transmitting an event;
   receiving, at a crew tracking module, the schedule and the event, and tracking and updating a status of individual crew members assigned to each event;
   estimating, via a crew analytics module, a fatigue level of at least one of the individual crew members and a group of the individual crew members;
   analyzing, via the crew analytics module, data associated with at least one of the fatigue level of at least one of the individual crew members, one or more historical events, a crew rules violation, and a determined derived disruption associated with the event, to determine if one or more predicted work disruptions exist; and
      generating, via the crew analytics module, an indication of one or more predicted work disruptions based on one or more determined predicted work disruptions.
10. The method of any preceding clause, wherein the historical event is of a same event type as the transmitted event.
11. The method of any preceding clause, further comprising:
   determining the derived disruption associated with the event based on causal analysis.
12. The method of any preceding clause, further comprising:
   receiving, at a crew rules module, an output from the crew tracking module; and
   determining if the status of individual crew members poses at least one of a fatigue risk and a rules violation.
13. The method of any preceding clause, further comprising:
   generating a recovery solution in response to at least one of a predicted work disruption, a fatigue risk and a rules violation.
14. The method of any preceding clause, further comprising:
   selecting one of approving and rejecting the recovery solution.
15. The method of any preceding clause, further comprising:
   providing the approved recovery solution to the event module.
16. The method of any preceding clause, wherein the recovery solution generation is iterative until one of the generated recovery solution is approved or a user-defined limit is reached.
17. The method of any preceding clause, wherein the event module is a simulation module, and the event is a simulated event.
18. A non-transitory, computer-readable medium storing instructions that, when executed by a work disruption platform processor cause the work disruption platform processor to perform a method associated with work disruptions, the method comprising:
   receiving, at an event module, a schedule and transmitting an event;
   receiving, at a crew tracking module, the schedule and the event, and tracking and updating a status of individual crew members assigned to each event;
   estimating, via a crew analytics module, a fatigue level of at least one of the individual crew members and a group of the individual crew members;
   analyzing, via the crew analytics module, data associated with at least one of the fatigue level of at least one of the individual crew members, one or more historical events, a crew rules violation, and a determined derived disruption associated with the event, to determine if one or more predicted work disruptions exist; and
   generating, via the crew analytics module, an indication of one or more predicted work disruptions based on one or more determined predicted work disruptions.
19. The medium of any preceding clause, wherein the historical event is of a same event type as the transmitted event.
20. The medium of any preceding clause, wherein determining the derived disruption further comprises:
   determining the derived disruption associated with the event based on causal analysis.
21. The medium of any preceding clause, wherein application of the work disruption platform processor further comprises:
   receiving, at a crew rules module, an output from the crew tracking module; and
   determining if the status of individual crew members poses at least one of a fatigue risk and a rules violation.
22. The medium of any preceding clause, wherein the event module is a simulation module, and the event is a simulated event.

## Claims

1. A system (100) comprising:
an event module (102) operative to receive a schedule and transmit an event (302);
a crew tracking module (104) to receive an output from the event module(102), the crew tracking module (104) operative to:
track and update a status of individual crew members assigned to each event (302), and
transmit a crew status update to the event module (102);
a crew analytics module (106) to receive an output from the crew tracking module (104), the crew analytics module (106) operative to:
predict work disruptions;
a memory (530) for storing program instructions (512);
at least one work disruption platform processor (500), coupled to the memory (530), and in communication with the event module (102), the crew tracking module (104), the crew analytics module (106), and operative to execute program instructions (512) to:
estimate, via the crew analytics module (106), a fatigue level of at least one of the individual crew members and a group of the individual crew members;
analyze, via the crew analytics module (106), the data associated with at least one of the fatigue level of at least one of the individual crew members, one or more historical events, a determined derived disruption associated with the event, and a crew rules violation, via the crew analytics module, to determine if one or more predicted work disruptions exist; and
generate, via the crew analytics module (106), an indication of one or more predicted work disruptions based on one or more determined predicted work disruptions.

2. The system of claim 1, wherein the historical event is of a same event type as the transmitted event (302).

3. The system of either of claim 1 or 2, wherein the crew analytics module (106) determines a derived disruption associated with the event (302) based on a causal analysis.

4. The system of claim 3, wherein the determined derived disruption associated with the event (302) is a result of an earlier disruption.

5. The system of any preceding claim, further comprising:
a crew rules module (108) to receive an output from the crew tracking module (104), the crew rules module (108) operative to determine if the status of individual crew members poses at least one of a fatigue risk and a rules violation.

6. The system of claim 5, further comprising:
a crew recovery module (110) to receive an output from at least one of the crew analytics module (106) and the crew rules module (108), the crew recovery module (110) operative to generate a recovery solution in response to at least one of a predicted work disruption, a fatigue risk and a rules violation.

7. The system of any preceding claim, wherein the event (302) is at least one of a flight departure, a flight arrival, an aircraft loading, a crew reporting for duty.

8. The system of any preceding claim, wherein the event module (102) is a simulation module, and the event (302) is a simulated event.

9. A method comprising:
receiving, at an event module(102), a schedule (112) and transmitting an event (302);
receiving, at a crew tracking module (104), the schedule (112) and the event (302), and tracking and updating a status of individual crew members assigned to each event (302);
estimating, via a crew analytics module (106), a fatigue level of at least one of the individual crew members and a group of the individual crew members;
analyzing, via the crew analytics module (106), data associated with at least one of the
fatigue level of at least one of the individual crew members, one or more historical events, a crew rules violation, and a determined derived disruption associated with the event, to determine if one or more predicted work disruptions exist; and
generating, via the crew analytics module (106), an indication of one or more predicted work disruptions based on one or more determined predicted work disruptions.

10. The method of claim 9, wherein the historical event is of a same event type as the transmitted event.

11. The method of either of claim 9 or 10, further comprising:
determining the derived disruption associated with the event based on causal analysis.

12. The method of any of claims 9 to 11, further comprising:
receiving, at a crew rules module, an output from the crew tracking module; and
determining if the status of individual crew members poses at least one of a fatigue risk and a rules violation.

13. The method of claim 12, further comprising:
generating a recovery solution in response to at least one of a predicted work disruption, a fatigue risk and a rules violation.

14. The method of claim 13, further comprising:
selecting one of approving and rejecting the recovery solution.

15. A non-transitory, computer-readable medium storing instructions that, when executed by a work disruption platform processor cause the work disruption platform processor to perform a method associated with work disruptions, the method comprising:
receiving, at an event module (102), a schedule (112) and transmitting an event (302);
receiving, at a crew tracking module (104), the schedule (112) and the event (302), and tracking and updating a status of individual crew members assigned to each event;
estimating, via a crew analytics module (106), a fatigue level of at least one of the individual crew members and a group of the individual crew members;
analyzing, via the crew analytics module (106), data associated with at least one of the fatigue level of at least one of the individual crew members, one or more historical events, a crew rules violation, and a determined derived disruption associated with the event, to determine if one or more predicted work disruptions exist; and
generating, via the crew analytics module (106), an indication of one or more predicted work disruptions based on one or more determined predicted work disruptions.
